# FASCICULE DE BREVET EUROPEEN

(11) **EP 2 812 571 B1**
(45) Date de publication et mention de la délivrance du brevet: **26.10.2016**
(21) Numéro de dépôt: 13706637.9
(22) Date de dépôt: 05.02.2013
(51) Int. Cl.: F03H 1/00

(54) **PROPULSEUR A EFFET HALL**
HALL-EFFEKT-ANTRIEB
HALL EFFECT THRUSTER

(30) Priorité: 06.02.2012 FR 1251055
(43) Date de publication de la demande: 17.12.2014
(73) Titulaire: SNECMA, 75015 Paris (FR)
(72) Inventeur: VIAL, Vanessa, Marjorie, F-27200 Vernon (FR); MOYON, Joël, F-27600 Gaillon (FR)
(74) Mandataire: Calvo de Nó, Rodrigo
(86) Numéro de dépôt international: PCT/FR2013/050242
(87) Numéro de publication internationale: WO 2013/117856

(56) Documents cités:
- WO-A1-97/21923
- US-B1- 7 500 350
- LAZURENKO A ET AL: "Recent advances in dual-mode hall effect thruster development", RECENT ADVANCES IN SPACE TECHNOLOGIES, 2005. RAST 2005. PROCEEDINGS OF 2ND INTERNATIONAL CONFERENCE ON ISTANBUL, TURKEY JUNE 9-11, 2005, PISCATAWAY, NJ, USA,IEEE, 9 juin 2005 (2005-06-09), pages 339-343, XP010838688, ISBN: 978-0-7803-8977-9
- ALEXEY LAZURENKO ET AL: "Dual-Mode Operation of Stationary Plasma Thrusters", JOURNAL OF PROPULSION AND POWER, vol. 22, no. 1, 1 janvier 2006 (2006-01-01), pages 38-475, XP055041195, ISSN: 0748-4658, DOI: 10.2514/1.8279
- AHEDO E ET AL: "Influence of design and operation parameters on Hall thruster performances", JOURNAL OF APPLIED PHYSICS, AMERICAN INSTITUTE OF PHYSICS. NEW YORK, US, vol. 96, no. 2, 15 juillet 2004 (2004-07-15), pages 983-992, XP012068136, ISSN: 0021-8979, DOI: 10.1063/1.1759790

## Description

### Arrière-plan de l'invention

La présente invention concerne le domaine des propulseurs à effet Hall.

L'invention concerne plus particulièrement un propulseur à effet Hall comportant un canal annulaire, une anode, un circuit d'injection, un circuit magnétique, et une cathode. Le canal annulaire est délimité par une paroi extérieure et une paroi intérieure, concentriques autour d'un axe central, et présente une extrémité aval ouverte et une extrémité amont fermée. L'anode est située à l'extrémité amont du canal annulaire. Le circuit d'injection est apte à injecter un gaz propulsif, comme, par exemple du Xénon, dans le canal annulaire. Le circuit magnétique est apte à générer un champ magnétique à l'extrémité aval du canal annulaire. La cathode est située à l'extérieur de l'extrémité aval du canal annulaire.

Les termes « amont » et « aval », dans le présent contexte, sont définis par rapport au sens de circulation normal du gaz propulsif dans la direction définie par l'axe central du canal annulaire.

Typiquement, dans un tel propulseur à effet Hall en fonctionnement, des électrons émis par la cathode et attirés vers l'anode au fond du canal annulaire sont piégés par le champ magnétique dans des trajectoires spirales entre les deux parois, formant ainsi une grille cathodique virtuelle. Des électrons échappant de cette enceinte magnétique en direction de l'anode entrent en collision avec des atomes du gaz propulsif injecté dans le canal annulaire par le circuit d'injection, créant ainsi un plasma ionisé.

Les ions positifs du plasma sont accélérés par le champ électrique régnant entre l'anode et la grille cathodique virtuelle formée par le nuage d'électrons piégés par le champ magnétique à l'extrémité ouverte du canal annulaire. Comme la masse de ces ions positifs est très supérieure à celle des électrons, leur trajectoire est à peine affectée par le champ magnétique. Les ions de ce jet plasmique sont finalement neutralisés en aval du champ magnétique par des électrons émis par la cathode ou ayant été produits par la ionisation du plasma.

On a commencé à utiliser les propulseurs à effet Hall dans des systèmes de commande d'orientation et/ou trajectoire (AOCS, de l'anglais « attitude and orbit control systems ») d'engins spatiaux et en particulier dans des AOCS de satellites géostationnaires. Les propulseurs à effet Hall permettent d'obtenir une impulsion spécifique (Iₛₚ) très élevée, de l'ordre de 1500 s, ce qui permet d'obtenir un pilotage précis de l'orientation et/ou la position de l'engin avec une masse et une complexité sensiblement moindres que les systèmes classiques utilisant des dispositifs inertiels, tels que, par exemple, des roues de réaction, en combinaison avec des propulseurs chimiques pour leur désaturation.

Toutefois, un propulseur à effet Hall offrant une haute impulsion spécifique ne peut normalement atteindre qu'une poussée très réduite. En conséquence, les AOCS incorporant des propulseurs à effet Hall sont classiquement complémentés par des propulseurs chimiques pour certaines manoeuvres rapides, telles que le transfert d'orbite ou la mise en position. Ceci présente toutefois l'inconvénient d'augmenter le coût et la complexité globale de l'engin spatial, au détriment de sa fiabilité.

Il a été établi dans des essais de caractérisation, ainsi que dans l'expérience SMART-1, que les propulseurs à effet Hall peuvent fonctionner non seulement dans un mode à haute impulsion spécifique, avec un faible débit de gaz propulsif et une tension électrique élevée entre anode et cathode, mais aussi, alternativement, dans un mode à forte poussée, avec un débit élevé et une tension électrique modérée. Toutefois, la stabilité du jet plasmique et l'efficacité du propulseur dépendent, entre autres, de la densité de plasma dans le canal annulaire. En conséquence, les propulseurs actuels sont optimisés pour un seul mode de fonctionnement. Ainsi, le remplacement des propulseurs chimiques de transfert d'orbite et mise en position nécessiterait normalement des propulseurs à effet Hall dimensionnés pour fonctionner en mode à forte poussée, en complément des propulseurs à effet Hall à impulsion spécifique élevée de l'AOCS. La complexité de l'engin spatial ne serait donc pas sensiblement réduite.

Dans le brevet US 7 500 350 B1, un propulseur à effet de Hall a été divulgué comportant un canal annulaire présentant une extrémité aval ouverte et une extrémité amont fermée, un circuit électrique, un circuit d'injection d'un débit de gaz propulsif dans le canal annulaire, et un circuit magnétique pour générer un champ magnétique à l'extrémité aval du canal annulaire. Le circuit électrique comprend une anode située à l'extrémité amont du canal annulaire, une cathode en aval de l'extrémité aval du canal annulaire et une source de tension électrique entre ladite anode et ladite cathode. Le canal annulaire est délimité par une paroi intérieure et une paroi extérieure, concentriques autour d'un axe central.

Sous l'effet de l'érosion, la paroi intérieure présente un diamètre décroissant dans le sens aval et la paroi extérieure présente un diamètre croissant dans le sens aval.

Afin de maintenir un écart approximativement constant entre les parois intérieure et extérieure malgré leur érosion graduelle pendant le fonctionnement du propulseur, la paroi intérieure et/ou la paroi extérieure sont mobiles en direction axiale et le propulseur comprend aussi un actionneur pour déplacer ladite paroi intérieure et/ou extérieure mobile. Toutefois, ce document ne mentionne pas comment faire fonctionner ce propulseur à effet de Hall tant en mode de forte poussée comme en mode de haute impulsion spécifique.

### Objet et résumé de l'invention

L'invention vise à proposer un propulseur à effet Hall capable de fonctionner tant en mode de forte poussée comme en mode de haute impulsion spécifique.

Dans au moins un premier mode de réalisation, ce but est atteint grâce au fait que la paroi intérieure est mobile et présente un diamètre décroissant dans le sens aval et en ce que le propulseur comprend aussi une unité de commande connectée au moins au circuit électrique, au circuit d'injection de gaz propulsif et audit actionneur et configurée de manière à faire varier lesdits débit et/ou tension et réguler la position de la paroi intérieure mobile pour adapter la section transversale de l'extrémité aval du canal annulaire en fonction desdits débit et/ou tension variables afin de maintenir dans une plage prédéterminée la densité plasmique à l'extrémité aval du canal annulaire..

Dans au moins un deuxième mode de réalisation, ce but est atteint grâce au fait que la paroi extérieure est mobile et présente un diamètre croissant dans le sens aval et en ce que le propulseur comprend aussi une unité de commande connectée au moins au circuit électrique, au circuit d'injection de gaz propulsif et audit actionneur et configurée de manière à faire varier lesdits débit et/ou tension et réguler la position de la paroi extérieure mobile pour adapter la section transversale de l'extrémité aval du canal annulaire en fonction desdits débit et/ou tension variables afin de maintenir dans une plage prédéterminée la densité plasmique à l'extrémité aval du canal annulaire.

Dans les deux cas, ces dispositions permettent de varier l'épaisseur de l'extrémité aval du canal annulaire en déplaçant axialement la paroi mobile, afin de maintenir une densité de plasma constante en sortie du canal annulaire avec des débits variables de gaz propulsif. On obtient ainsi un propulseur à effet Hall particulièrement adaptable, pouvant fonctionner en mode de forte poussée, avec un débit élevé de plasma distribué sur une large section de sortie du canal annulaire, ou en mode de haute impulsion spécifique, avec un plus faible débit de plasma traversant une plus étroite section de sortie du canal annulaire.

Afin de déplacer axialement la paroi mobile, ledit actionneur de la paroi mobile peut être par exemple un actionneur piézoélectrique de la paroi mobile. Un tel actionneur piézoélectrique présente, pour cette application, l'avantage d'être compatible avec une utilisation dans l'environnement spatial, avec une grande durée de vie, et sans interférence avec les champs électrique et magnétique élevées régnant au sein d'un propulseur à effet Hall, tout en offrant une très grande vitesse de réaction. En particulier, l'actionneur piézoélectrique peut être un moteur ultrasonique. On entend comme « moteur ultrasonique », dans le présent contexte, un actionneur comportant un rotor et un stator piézoélectrique sur lequel peut être induite électriquement une onde progressive ultrasonique dont la crête, en contact avec le rotor, l'actionne dans sa direction d'avancement. Bien que les moteurs ultrasoniques soient généralement rotatifs, avec des rotors et stators annulaires, on peut aussi envisager, dans la présente application, l'utilisation d'un moteur ultrasonique linéaire avec un rotor et un stator droit. On maintient la dénomination de « rotor » pour la pièce mobile même si elle est mobile en direction linéaire plutôt que rotative. Le moteur ultrasonique présente l'avantage spécifique d'offrir des couples et forces relativement importants, tout en évitant de produire de parasites sur le propulseur à effet Hall, dont les fréquences de fonctionnement sont de l'ordre de 30 kHz, ou sur des équipements de télécommunications de l'engin spatial, dont les fréquences sont de l'ordre des GHz. En effet, la fréquence de fonctionnement des moteurs ultrasoniques est de l'ordre des 30 MHz.

En particulier, les parois intérieure et extérieure peuvent être en matière céramique, laquelle est particulièrement appropriée par ses caractéristiques électriques, magnétiques et de résistance à l'érosion.

La présente invention se rapporte aussi à un engin spatial incorporant au moins un tel propulseur à effet Hall, et à un procédé de régulation de poussée de ce propulseur à effet Hall.

Dans au moins un mode de réalisation du procédé de régulation de poussée, un débit de gaz propulsif injecté dans le canal annulaire par le circuit et/ou une tension électrique entre lesdites anode et cathode changent en fonction d'une poussée souhaitée, et la position de la paroi mobile est régulée de manière à adapter la section transversale de l'extrémité aval du canal annulaire en fonction desdits débit et/ou tension variables de manière à maintenir dans une plage prédéterminée la densité plasmique à l'extrémité aval du canal annulaire. On peut ainsi varier le fonctionnement du propulseur à effet Hall entre un mode à forte poussée et un mode à haute impulsion spécifique sans affecter la stabilité du jet plasmique.

### Brève description des dessins

L'invention sera bien comprise et ses avantages apparaîtront mieux, à la lecture de la description détaillée qui suit, de deux modes de réalisation représentés à titre d'exemples non limitatifs. La description se réfère aux dessins annexés sur lesquels :
- la figure 1A est une vue schématique en coupe axiale d'un propulseur à effet Hall suivant un premier mode de réalisation en mode de forte poussée ;
- la figure 1B est une vue schématique en coupe axiale du propulseur à effet Hall de la figure 1A en mode d'haute impulsion spécifique ;
- la figure 2A est une vue schématique en coupe axiale d'un propulseur à effet Hall suivant un deuxième mode de réalisation en mode de forte poussée ; et
- la figure 2B est une vue schématique en coupe axiale du propulseur à effet Hall de la figure 2A en mode d'haute impulsion spécifique.

### Description détaillée de l'invention

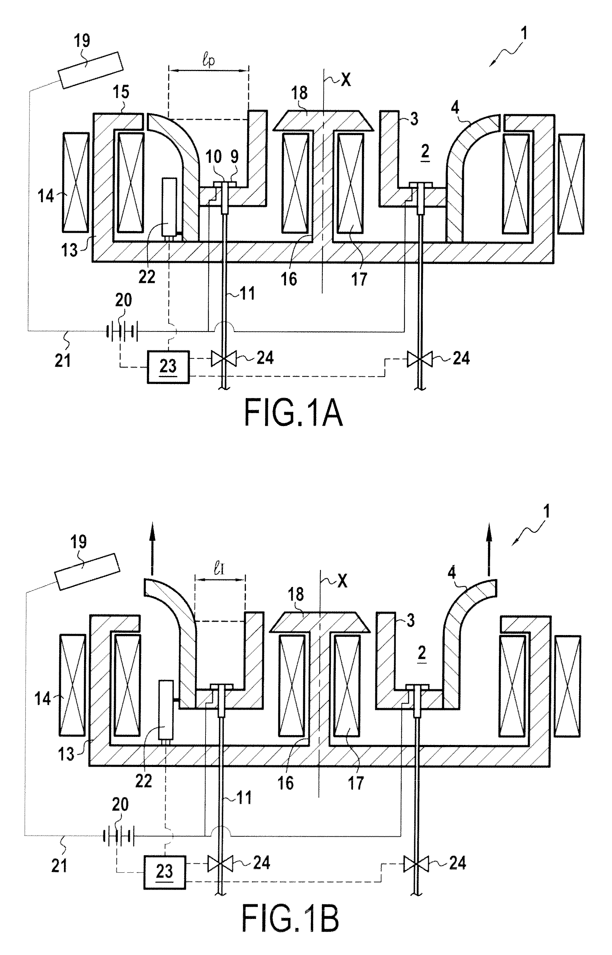

Les figures 1A et 1B illustrent deux positions différentes d'un même propulseur 1 à effet Hall suivant un premier mode de réalisation. Ce propulseur 1 comporte un canal annulaire 2 délimité par une paroi intérieure 3 et une paroi extérieure 4 en matière céramique, concentriques autour d'un axe central X. Ce canal annulaire 2 présente une extrémité aval ouverte et une extrémité amont fermée. Le canal annulaire 2 présente aussi, à son extrémité amont, des tuyères 10 d'injection de gaz propulsif dans le canal annulaire 2. Les tuyères 10 sont connectées à une source de gaz propulsif par un circuit d'injection 11 comportant des dispositifs de régulation de débit 24. Ces dispositifs 24 peuvent être, par exemple, une vanne crayon ou un thermo-capillaire, c'est-à-dire un capillaire avec des moyens de chauffage permettant d'activement varier sa température et donc le débit traversant. Des tels dispositifs de régulation de débit peuvent aussi être complémentés par des restricteurs passifs. Le gaz propulsif peut être du xénon, qui présente les avantages d'un poids moléculaire élevé et un potentiel d'ionisation comparativement bas. Toutefois, comme dans d'autres propulseurs à effet Hall, une large variété de gaz propulsifs pourrait être utilisée.

Le propulseur 1 comprend aussi un circuit magnétique. Ce circuit magnétique comprend, autour de la paroi extérieure 4, des noyaux magnétiques 13 entourés de bobines 14 et aboutissant dans un pôle extérieur 15 à proximité de l'extrémité ouverte du canal annulaire 2. Le circuit magnétique comprend aussi un noyau magnétique central 16 au centre du propulseur 1 entouré de bobines 17 et aboutissant dans un pôle intérieur 18 de polarité inverse au pôle extérieur 15 et situé opposé à celui-ci à proximité de l'extrémité ouverte du canal annulaire 2, de manière à générer un champ magnétique radial entre les deux. Le propulseur 1 comprend aussi un circuit électrique 21 comprenant une anode 9 située à l'extrémité amont du canal annulaire 2, une cathode 19 située en aval de l'extrémité ouverte du canal annulaire 2, et une source de tension électrique 20 entre l'anode 9 et la cathode 19. Bien que dans les modes de réalisation illustrés la cathode 19 soit une cathode creuse, d'autres types de cathodes pourraient être utilisées alternativement.

Le canal annulaire 2 peut notamment être axisymétrique. Toutefois, des formes non-axisymétriques peuvent être alternativement envisagées, par exemple, à section transversale ovale ou en hippodrome.

En fonctionnement, une tension électrique, typiquement de l'ordre de 150 à 800 V quand du xénon est utilisé comme gaz propulsif, est établie entre la cathode creuse 19 en aval de l'extrémité aval du canal annulaire 2 et l'anode 9 au fond du canal annulaire 2. La cathode creuse 19 commence alors à émettre des électrons, lesquels sont en grande partie piégés dans une enceinte magnétique formée par le champ magnétique, adaptée aux performances souhaitées et au gaz propulsif utilisée, et qui est typiquement de l'ordre de 100 à 300 gauss avec du xénon comme gaz propulsif. Les électrons piégés dans cette enceinte magnétique vont ainsi former une grille cathodique virtuelle. Un champ électrique est ainsi généré dans le canal annulaire, entre l'anode 9 et cette grille cathodique virtuelle.

Des électrons hautement énergétiques (typiquement 10 à 40 eV) échappent à l'enceinte magnétique en direction de l'anode 9, tandis que du gaz propulsif est injecté dans le canal annulaire 2 à travers les tuyères 10. Des impacts entre ces électrons et des atomes du gaz propulsif ionisent le gaz propulsif, lequel est alors accéléré par le champ électrique vers l'extrémité aval du canal annulaire 2. Comme la masse des ions de gaz propulsif est plusieurs ordres de magnitude plus élevée que celle des électrons, le champ magnétique ne confine pas ces ions de la même manière. Le propulseur 1 génère donc un jet plasmique qui est éjecté à travers l'extrémité aval du canal annulaire 2 pour produire une poussée sensiblement alignée avec l'axe central X.

Dans ce propulseur 1 du premier mode de réalisation, la paroi extérieure 4 est mobile en direction axiale et présente un diamètre croissant dans le sens aval. La paroi intérieure 3 est par contre fixe. Ainsi, quand la paroi extérieure 4 est en retrait en direction axiale, comme dans la position illustrée sur la figure 1A, les parois intérieure et extérieure 3, 4 présentent un écart radial Iₚ relativement important et donc une grande section transversale de passage du jet plasmique en sortie du canal annulaire 2. Par contre, quand la paroi extérieure 3 est avancée en direction aval, comme illustré sur la figure 1B, les parois intérieure et extérieure 3, 4 présentent, en sortie du canal annulaire 2, un moindre écart radial lᵢ et donc une moindre section transversale de passage du jet plasmique. Ainsi, la position illustrée sur la figure 1A, en distribuant le jet plasmique sur une plus grande surface de sortie à l'extrémité aval du canal annulaire 2, est plus appropriée pour un jet plasmique à grand débit, et donc plus forte poussée. Par contre, la position illustrée sur la figure 1B, en restreignant la surface de sortie du canal annulaire 2, permet de maintenir la stabilité du jet plasmique même avec des débits réduits et des tensions électriques plus élevées, et est donc plus approprié pour un mode de fonctionnement à haute impulsion spécifique.

Pour déplacer axialement la paroi extérieure 4, celle-ci peut être actionnée par un actionneur 22 comprenant un moteur ultrasonique, lequel, grâce à son faible encombrement, peut facilement être intégré dans le propulseur 1. Bien que dans ce mode de réalisation soit spécifiquement proposé un moteur ultrasonique, d'autres types d'actionneurs, notamment piézoélectriques, peuvent alternativement être envisagés.

Une unité de commande 23connectée au moins à l'actionneur 22, aux dispositifs de régulation de débit de gaz propulsif du circuit 11 et à la source de tension électrique entre l'anode 9 et la cathode 19, peut réguler le débit de gaz propulsif fourni par le circuit 11, la tension électrique entre la cathode 19 et l'anode 9, et la position axiale de la paroi extérieure 4 de manière à varier la poussée et l'impulsion spécifique du propulseur 1. Cette unité de commande 23 comprend un processeur de données et une mémoire dans laquelle sont stockées des abaques indiquant la position axiale de la paroi extérieure 4 correspondant à un point de fonctionnement du propulseur 1 défini par un couple courant/tension de l'alimentation électrique de l'anode 9 et la cathode 19.

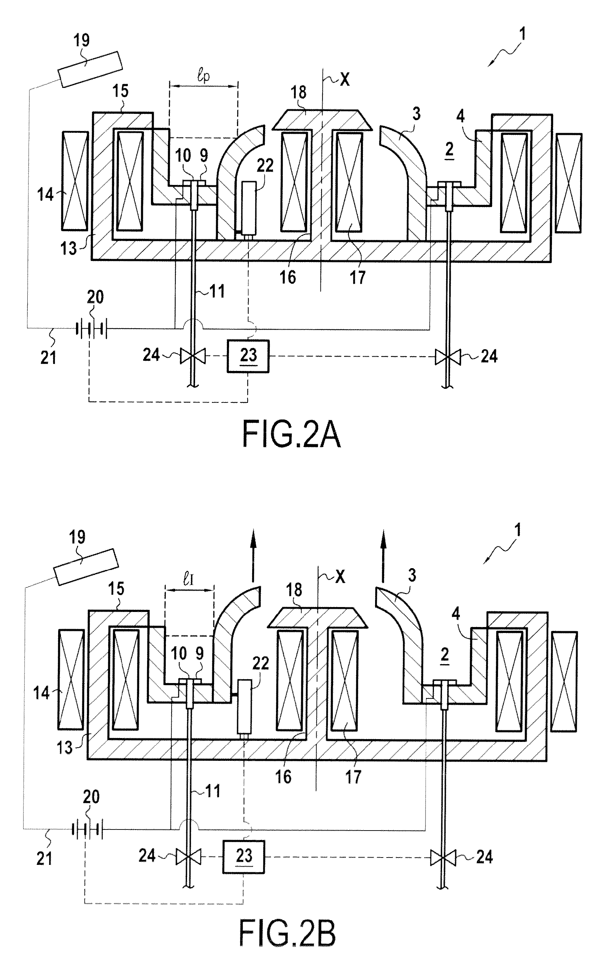

Bien que dans ce premier mode de réalisation la paroi extérieure 4 soit la paroi mobile, dans d'autres modes de réalisation la paroi intérieure 3 peut être mobile, à la place ou en complément de la paroi extérieure 4. Ainsi, dans le deuxième mode de réalisation illustré sur les figures 2A et 2B, la paroi extérieure 4 est fixe, tandis que la paroi intérieure 3 est mobile en direction axiale. Les autres éléments du propulseur 1 sont identiques à ceux du premier mode de réalisation et reçoivent les mêmes chiffres de référence sur les dessins. Dans ce deuxième mode de réalisation, la paroi intérieure 4 présente un diamètre décroissant dans le sens aval. Ainsi, comme dans le premier mode de réalisation, le déplacement axial de la paroi mobile permet de passer d'un mode de fonctionnement à forte poussée, illustré sur la figure 2A, à un mode de fonctionnement à haute impulsion spécifique, illustré sur la figure 2B, et vice versa.

Dans les deux modes de réalisation, une partie du jet plasmique peut être éjectée à un angle considérable de la direction axiale (p.ex. jusqu'à 45°). Il convient donc d'adopter une forme des parois 3,4 qui évite dans la mesure du possible l'érosion causée par ces ions. Ainsi, par exemple, dans les modes de réalisation illustrés la forme des parois mobiles suit une développante de cercle, atteignant à leur extrémité distale un angle supérieur à 45° par rapport à l'axe central X.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par exemple, tant la paroi intérieure comme extérieure pourraient être axialement mobiles. Par conséquent, la description et les dessins doivent être considérés dans un sens illustratif plutôt que restrictif.

## Revendications

1. Propulseur (1) à effet Hall comportant:
un canal annulaire (2) délimité par une paroi intérieure (3) et une paroi extérieure (4), concentriques autour d'un axe central (X), le canal annulaire (2) présentant une extrémité aval ouverte et une extrémité amont fermée, et la paroi intérieure (3) étant mobile en direction axiale ;
un actionneur (22) pour déplacer ladite paroi intérieure mobile (3) en direction axiale ;
un circuit électrique (21) comprenant une anode (9) située à l'extrémité amont du canal annulaire (2), une cathode (19) en aval de l'extrémité aval du canal annulaire (2), et une source de tension électrique (20) entre lesdites anode (9) et cathode (19) ;
un circuit (11) d'injection d'un débit de gaz propulsif dans le canal annulaire (2) ; et
un circuit magnétique pour générer un champ magnétique (M) à l'extrémité aval du canal annulaire (2) ;
dans lequel la paroi intérieure mobile (3) présente un diamètre décroissant dans le sens aval et le propulseur (1) comprend aussi une unité de commande (23) connectée au moins auxdits circuits électrique et d'injection de gaz propulsif et audit actionneur et configurée de manière à faire varier lesdits débit et/ou tension et réguler la position de la paroi intérieure mobile (3) en fonction desdits débit et/ou tension variables pour adapter la section transversale de l'extrémité aval du canal annulaire (2) afin de maintenir dans une plage prédéterminée la densité plasmique à l'extrémité aval du canal annulaire (2).

2. Propulseur (1) à effet Hall comportant:
un canal annulaire (2) délimité par une paroi intérieure (3) et une paroi extérieure (4), concentriques autour d'un axe central (X), le canal annulaire (2) présentant une extrémité aval ouverte et une extrémité amont fermée, et la paroi extérieure (4) étant mobile en direction axiale ;
un actionneur pour déplacer ladite paroi extérieure mobile (4) en direction axiale ;
un circuit électrique (21) comprenant une anode (9) située à l'extrémité amont du canal annulaire (2), une cathode (19) en aval de l'extrémité aval du canal annulaire (2), et une source de tension électrique (20) entre lesdites anode (9) et cathode (19) ;
un circuit (11) d'injection d'un débit de gaz propulsif dans le canal annulaire (2) ; et
un circuit magnétique pour générer un champ magnétique (M) à l'extrémité aval (5) du canal annulaire (2) ; et
dans lequel la paroi extérieure mobile (4) présente un diamètre croissant dans le sens aval et le propulseur (1) comprend aussi une unité de commande (23) connectée au moins auxdits circuits électrique et d'injection de gaz propulsif et audit actionneur et configurée de manière à faire varier lesdits débit et/ou tension et réguler la position de la paroi extérieure mobile (4) pour adapter la section transversale de l'extrémité aval du canal annulaire (2) en fonction desdits débit et/ou tension variables afin de maintenir dans une plage prédéterminée la densité plasmique à l'extrémité aval du canal annulaire (2).

3. Propulseur (1) à effet Hall suivant une quelconque des revendications précédentes, dans lequel ledit actionneur est un actionneur piézoélectrique.

4. Propulseur (1) à effet Hall suivant la revendication 3, dans lequel ledit actionneur piézoélectrique est un moteur ultrasonique.

5. Propulseur (1) à effet Hall suivant l'une quelconque des revendications 1 à 4, dans lequel les parois intérieure et extérieure (3,4) sont en matière céramique.

6. Engin spatial incorporant au moins un propulseur (1) à effet Hall suivant l'une quelconque des revendications 1 à 5.

7. Procédé de régulation de poussée d'un propulseur à effet Hall (1) suivant une quelconque des revendications 1 à 5, dans lequel :
le débit de gaz propulsif injecté dans le canal annulaire (2) par le circuit (11) et/ou la tension électrique entre lesdites anode (9) et cathode (19) changent en fonction d'une poussée souhaitée ;
la position de la paroi mobile (3,4) est modifiée de manière à adapter la section transversale de l'extrémité aval du canal annulaire (2) en fonction desdits débit et/ou tension variables pour maintenir dans une plage prédéterminée la densité plasmique à l'extrémité aval du canal annulaire (2).

## Patentansprüche

1. Hall-Efifekt-Antrieb (1), umfassend:
einen ringförmigen Kanal (2), der durch eine Innenwand (3) und eine Außenwand (4), welche um eine Mittelachse (X) konzentrisch sind, begrenzt ist, wobei der ringförmige Kanal (2) ein offenes stromabwärtiges Ende und ein geschlossenes stromaufwärtiges Ende aufweist, und wobei die Innenwand (3) in axialer Richtung beweglich ist,
einen Aktor (22), um die bewegliche Innenwand (3) in axialer Richtung zu bewegen,
einen Stromkreis (21), der eine an dem stromaufwärtigen Ende des ringförmigen Kanals (2) befindliche Anode (9), eine Kathode (19) nach dem stromabwärtigen Ende des ringförmigen Kanals (2) und eine elektrische Spannungsquelle (20) zwischen der Anode (9) und der Kathode (19) umfasst,
einen Kreis (11) zum Einleiten einer Menge an Treibgas in den ringförmigen Kanal (2) und
einen Magnetkreis zum Erzeugen eines Magnetfeldes (M) an dem stromabwärtigen Ende des ringförmigen Kanals (2),
wobei die bewegliche Innenwand (3) einen in stromabwärtiger Richtung abnehmenden Durchmesser aufweist und der Antrieb (1) auch eine Steuereinheit (23) umfasst, die wenigstens an den Stromkreis und den Kreis zum Einleiten von Treibgas und an den Aktor angeschlossen und dazu ausgebildet ist, die Menge und/oder die Spannung zu variieren und die Position der beweglichen Innenwand (3) in Abhängigkeit von der veränderlichen Menge und/oder veränderlichen Spannung zu regeln, um den Querschnitt des stromabwärtigen Endes des ringförmigen Kanals (2) anzupassen, um die Plasmadichte an dem stromabwärtigen Ende des ringförmigen Kanals (2) in einem vorbestimmten Bereich zu halten.

2. Hall-Efifekt-Antrieb (1), umfassend:
einen ringförmigen Kanal (2), der durch eine Innenwand (3) und eine Außenwand (4), welche um eine Mittelachse (X) konzentrisch sind, begrenzt ist, wobei der ringförmige Kanal (2) ein offenes stromabwärtiges Ende und ein geschlossenes stromaufwärtiges Ende aufweist, und wobei die Außenwand (4) in axialer Richtung beweglich ist,
einen Aktor, um die bewegliche Außenwand (4) in axialer Richtung zu bewegen,
einen Stromkreis (21), der eine an dem stromaufwärtigen Ende des ringförmigen Kanals (2) befindliche Anode (9), eine Kathode (19) nach dem stromabwärtigen Ende des ringförmigen Kanals (2) und eine elektrische Spannungsquelle (20) zwischen der Anode (9) und der Kathode (19) umfasst,
einen Kreis (11) zum Einleiten einer Menge an Treibgas in den ringförmigen Kanal (2) und
einen Magnetkreis zum Erzeugen eines Magnetfeldes (M) an dem stromabwärtigen Ende (5) des ringförmigen Kanals (2), und
wobei die bewegliche Außenwand (4) einen in stromabwärtiger Richtung zunehmenden Durchmesser aufweist und der Antrieb (1) auch eine Steuereinheit (23) umfasst, die wenigstens an den Stromkreis und den Kreis zum Einleiten von Treibgas und an den Aktor angeschlossen und dazu ausgebildet ist, die Menge und/oder die Spannung zu variieren und die Position der beweglichen Außenwand (4) zu regeln, um den Querschnitt des stromabwärtigen Endes des ringförmigen Kanals (2) in Abhängigkeit von der veränderlichen Menge und/oder veränderlichen Spannung anzupassen, um die Plasmadichte an dem stromabwärtigen Ende des ringförmigen Kanals (2) in einem vorbestimmten Bereich zu halten.

3. Hall-Effekt-Antrieb (1) nach einem der vorhergehenden Ansprüche, wobei der Aktor ein piezoelektrischer Aktor ist.

4. Hall-Effekt-Antrieb (1) nach Anspruch 3, wobei der piezoelektrische Aktor ein Ultraschall motor ist.

5. Hall-Effekt-Antrieb (1) nach einem der Ansprüche 1 bis 4, wobei die Innen- und Außenwände (3, 4) aus keramischem Material bestehen.

6. Raumfahrzeug, das wenigstens einen Hall-Effekt-Antrieb (1) nach einem der Ansprüche 1 bis 5 enthält.

7. Verfahren zur Regelung des Schubs eines Hall-Effekt-Antriebs (1) nach einem der Ansprüche 1 bis 5, bei dem:
die über den Kreis (11) in den ringförmigen Kanal (2) eingeleitete Menge an Treibgas und/oder die elektrische Spannung zwischen der Anode (9) und der Kathode (19) sich in Abhängigkeit von einem gewünschten Schub ändern,
die Position der beweglichen Wand (3, 4) derart geändert wird, dass der Querschnitt des stromabwärtigen Endes des ringförmigen Kanals (2) in Abhängigkeit von der veränderlichen Menge und/oder veränderlichen Spannung angepasst wird, um die Plasmadichte an dem stromabwärtigen Ende des ringförmigen Kanals (2) in einem vorbestimmten Bereich zu halten.

## Claims

1. A Hall effect thruster (1) comprising:
· an annular channel (2) defined by an inner wall (3) and an outer wall (4), which walls are coaxial about a central axis (X), the annular channel (2) presenting a downstream end that is open and an upstream end that is closed, and the inner wall (3) being movable in the axial direction;
· an actuator (22) for moving said movable inner wall (3) in the axial direction;
· an electric circuit (21) having an anode (9) situated at the upstream end of the annular channel (2), a cathode (19) at the downstream end of the annular channel (2), and an electric voltage source (20) between said anode (9) and cathode (19);
· an injection circuit (11) for injecting a flow of propulsion gas into the annular channel (2); and
· a magnetic circuit for generating a magnetic field (M) at the downstream end of the annular channel (2);
wherein the movable inner wall (3) presents a diameter that decreases in the downstream direction, and the thruster (1) also comprises a control unit (23) that is connected at least to said electric circuit, to said propulsion gas injection circuit, and to said actuator, and that is configured in such a manner as to vary said flow and/or said voltage and to regulate the position of the movable inner wall (3) as a function of said variable flow and/or of said variable voltage in order to adapt the cross-section of the downstream end of the annular channel (2) so as to maintain the plasma density at the downstream end of the annular channel (2) within a predetermined range.

2. A Hall effect thruster (1) comprising:
· an annular channel (2) defined by an inner wall (3) and an outer wall (4), which walls are coaxial about a central axis (X), the annular channel (2) presenting a downstream end that is open and an upstream end that is closed, and the outer wall (4) being movable in the axial direction;
· an actuator for moving said movable outer wall (4) in the axial direction;
· an electric circuit (21) having an anode (9) situated at the upstream end of the annular channel (2), a cathode (19) at the downstream end of the annular channel (2), and an electric voltage source (20) between said anode (9) and cathode (19);
· an injection circuit (11) for injecting a flow of propulsion gas into the annular channel (2); and
· a magnetic circuit for generating a magnetic field (M) at the downstream end (5) of the annular channel (2);
wherein the movable outer wall (4) presents a diameter that increases in the downstream direction, and the thruster (1) also comprises a control unit (23) that is connected at least to said electric circuit, to said propulsion gas injection circuit, and to said actuator, and configured in such a manner as to vary said flow and/or said voltage and to regulate the position of the movable outer wall (4) in order to adapt the cross-section of the downstream end of the annular channel (2) as a function of said variable flow and/or of said variable voltage so as to maintain the plasma density at the downstream end of the annular channel (2) within a predetermined range.

3. A Hall effect thruster (1) according to any preceding claim, wherein said actuator is a piezoelectric actuator.

4. A Hall effect thruster (1) according to claim 3, wherein said piezoelectric actuator is an ultrasonic motor.

5. A Hall effect thruster (1) according to any one of claims 1 to 4, wherein the inner and outer walls (3, 4) are made of ceramic material.

6. A space vehicle including at least one Hall effect thruster (1) according to any one of claims 1 to 5.

7. A method of regulating the thrust of a Hall effect thruster (1) according to any one of claims 1 to 5, wherein:
· the flow of propulsion gas injected into the annular channel (2) by the circuit (11) and/or the electric voltage between said anode (9) and cathode (19) change as a function of a desired thrust; and
· the position of the movable wall (3, 4) is modified so as to adapt the cross-section of the downstream end of the annular channel (2) as a function of said variable flow and/or of said variable voltage so as to maintain the plasma density at the downstream end of the annular channel (2) in a predetermined range.
